# EUROPEAN PATENT APPLICATION

(11) **EP 4 825 461 A2**
(43) Date of publication of application: **21.10.2026**
(21) Application number: 26167090.5
(22) Date of filing: 24.03.2026
(51) Int. Cl.: A63F 13/24, A63F 13/92, A63F 13/822

(54) **PORTABLE GAME DEVICE AND STORAGE MEDIUM**

(30) Priority: 27.03.2025 JP 2025053560
(71) Applicant: Bandai Co., Ltd., Tokyo 111-8081 (JP)
(72) Inventor: OSHIKIRI, Chisato, Tokyo, 111-8081 (JP); OKAMOTO, Yuri, Tokyo, 111-8081 (JP); YASHIKI, Atsushi, Tokyo, 111-8081 (JP); HATAYAMA, Hirotaka, Tokyo, 111-8081 (JP); SAKAMOTO, Daisuke, Tokyo, 111-8081 (JP)
(74) Representative: Studio Torta S.p.A.

(57) **Abstract**

A portable game device executes an electronic game. The portable game device includes: a first operation portion enabling a rotation operation about a first axis; a second operation portion enabling a press operation in a first direction along the first axis; and a controller configured to control a progress of the electronic game in response to an operation on at least one of the first operation portion and the second operation portion.

## Description

### CROSS-REFERENCE TO RELATED APPLICATIONS

This application is based on and claims priority under 35 USC 119 from Japanese Patent Application No. 2025-053560 filed on March 27, 2025, the contents of which are incorporated herein by reference.

### TECHNICAL FIELD

The present disclosure relates to a portable game device and a storage medium.

### BACKGROUND

Japanese Patent Application Laid-Open Publication No. 2018-82938 (hereinafter, referred to as Patent Literature 1) describes a game device that enables an experience of an action of collecting an object while a display image of the game device is viewed. The game device is configured such that when a device body is rotated, a display orientation of a disposed image of the object displayed on an image display unit is rotated. Further, in this game device, an operation portion enabling a push operation and a rotation operation is provided in an upper portion of the device body, and a display magnification can be changed by the rotation operation.

Incidentally, in a device such as the game device of Patent Literature 1, in which a player can operate an operation portion as a game progress, one of important game elements is to make the player feel that the operation is fun and easy.

The present disclosure provides a portable game device and a storage medium that can provide a highly interesting game experience.

### SUMMARY

A first aspect of the present disclosure relates to a portable game device that executes an electronic game. The portable game device includes: a first operation portion enabling a rotation operation about a first axis; a second operation portion enabling a press operation in a first direction along the first axis; and a controller configured to control a progress of the electronic game in response to an operation on at least one of the first operation portion and the second operation portion.

A second aspect of the present disclosure relates to a non-transitory computer-readable storage medium storing a control program for causing a portable game device to perform a process. The portable game device executes an electronic game and includes a first operation portion enabling a rotation operation about a first axis, a second operation portion enabling a press operation in a first direction along the first axis, and a processor, and the process comprises: controlling a progress of the electronic game in response to an operation on at least one of the first operation portion and the second operation portion.

### BRIEF DESCRIPTION OF DRAWINGS

Exemplary embodiments of the present disclosure will be described in detail based on the following figures, wherein
Fig. 1 is a diagram showing an example of an appearance configuration of a portable game device 100 according to the present embodiment;
Fig. 2 is a block diagram showing an example of a hardware configuration of the portable game device 100 according to the present embodiment;
Fig. 3 is a perspective view of a side operation portion 130;
Fig. 4 is a perspective view showing the side operation portion 130 in a state in which a rotation operation portion 131 is removed from the side operation portion 130 shown in Fig. 3;
Fig. 5 is a perspective view of a shaft member 133;
Fig. 6 is a perspective view of the rotation operation portion 131 as viewed from above;
Fig. 7 is a perspective view of the rotation operation portion 131 as viewed from below;
Fig. 8 is a side view of the side operation portion 130;
Fig. 9 is a cross-sectional view of the side operation portion 130 in an unpressed state of a press button 132a;
Fig. 10 is a cross-sectional view of the side operation portion 130 in a pressed state of the press button 132a;
Fig. 11 shows diagrams illustrating various display forms that can be switched in a raising game according to an embodiment of the present disclosure; and
Fig. 12 is a diagram showing another example of the switchable display form.

### DESCRIPTION OF EMBODIMENTS

### Embodiment

Hereinafter, an embodiment will be described in detail with reference to the accompanying drawings. The following embodiment does not limit the disclosure according to the claims, and all combinations of features described in the embodiment are not necessarily essential to the disclosure. Two or more features of the plurality of features described in the embodiment may be freely combined. The same or similar components are denoted by the same reference numerals, and redundant description thereof is omitted.

In the embodiment described below, an example will be described in which the present disclosure is applied to a game device capable of executing a game (hereinafter, referred to as a raising game) of raising a character as an example of a portable game device. However, the present disclosure is applicable to any device capable of executing an electronic game including an interesting element of obtaining a game element. That is, the electronic game to which the present disclosure is applied is not limited to a game of a specific genre such as a raising game.

### Appearance of Portable Game Device 100 According to Present Embodiment

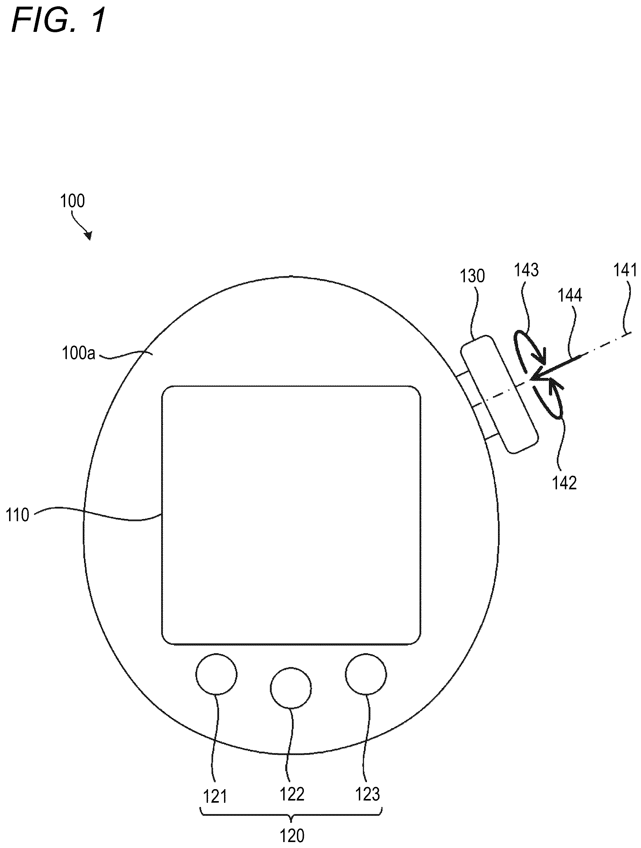

Fig. 1 is a diagram showing an example of an appearance of a portable game device 100 according to the present embodiment. In the present embodiment, the portable game device 100 is formed in a mode of a portable toy and operates using power supplied from a battery or a dry cell (not shown). In the battery-operated mode, the portable game device 100 is provided with a terminal (not shown) that can be connected to a power source, and is configured such that the battery is charged by electrically connecting a commercial power source or the like to the terminal via a power supply cable.

The portable game device 100 includes a body portion 100a, a display 110 provided on a front surface of the body portion 100a, a lower operation portion 120 provided on the same surface as the surface on which the display 110 is disposed, and a side operation portion 130 provided on a side of the body portion 100a in a front view of the display 110.

The body portion 100a is a housing portion of the portable game device 100, and has a circular front shape with a rounded outer peripheral surface (for example, an egg shape). The display 110 includes, for example, a liquid crystal display, and displays various images related to the game.

The side operation portion 130 is a dial push type operation member that enables a rotation operation and a push operation. The side operation portion 130 enables the rotation operation in a clockwise direction (right-handed direction) 142 and a counterclockwise direction (left-handed direction) 143 about an axis 141, and enables the press operation in a pressing direction 144 along the axis 141. The axis 141 is an example of a "first axis" of the present disclosure. The pressing direction 144 is an example of a "first direction" of the present disclosure.

By disposing the lower operation portion 120 and the side operation portion 130 in this manner, a user who plays a game while holding the portable game device 100 in his/her hand and looking at the display 110 can easily operate the lower operation portion 120 with one hand while operating to rotate and push the side operation portion 130 with the other hand, for example.

### Hardware Configuration of Game Device

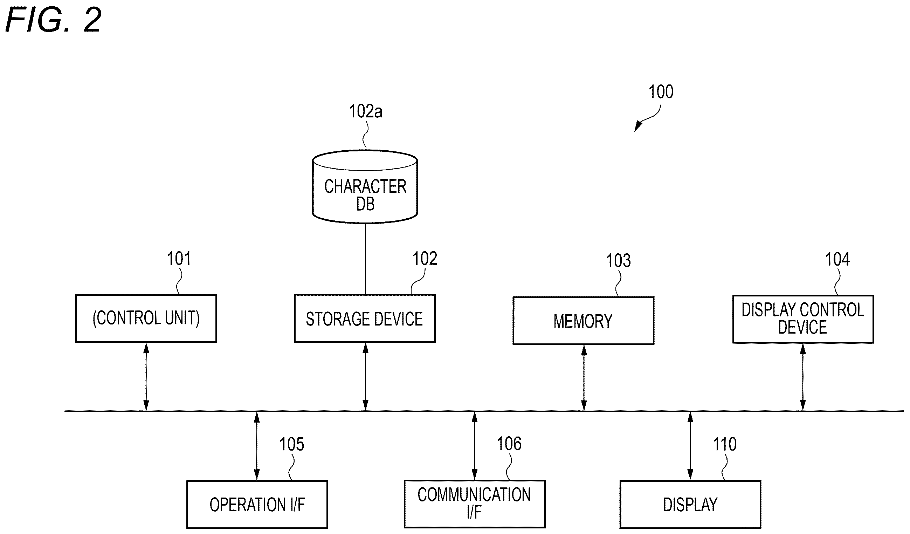

Fig. 2 is a block diagram showing an example of a hardware configuration of the portable game device 100 according to the present embodiment. As shown in Fig. 2, the portable game device 100 includes a processor 101, a storage device 102, a memory 103, a display control device 104, an operation interface (I/F) 105, a communication I/F 106, and a display 110. The members are accommodated in the body portion 100a.

The processor 101 is an example of a "controller" of the present disclosure, and includes a central processing unit (CPU) or the like. The processor 101 performs various types of control including operation control of each hardware in the portable game device 100. The processor 101 performs various types of control by reading a necessary program stored in the storage device 102, loading the program into the memory 103, and executing the program. For example, the processor 101 controls a progress of the raising game according to an operation on at least one of the lower operation portion 120 and the side operation portion 130.

The storage device 102 is a device that is formed by, for example, a nonvolatile memory, and capable of permanently storing information. The storage device 102 stores a program related to operation of the portable game device 100, a program of the raising game executed in the portable game device 100, and information of parameters necessary for achieving various types of control. In addition, the storage device 102 also functions as a character data base (DB) 102a of data related to the raising game.

The character DB 102a is a database that manages, as a record, information (character information) on a character that can be raised in the raising game. In the raising game executed in the portable game device 100 according to the present embodiment, the user can raise the character that grows through a plurality of growth stages. The character is configured such that an appearance thereof changes as the growth stage changes. The character DB 102a manages, as the record, various pieces of information on each possible appearance of the character at each growth stage. The character information related to one record includes, for example, graphics information for rendering the appearance of the character in association with a character identification (ID) that uniquely specifies (the appearance of) the character, the growth stage indicating a stage of growth in which the character has the appearance, and future grow information indicating a future appearance the character may grow into from that appearance.

The memory 103 is a storage device used for temporary data storage, such as a volatile memory. The memory 103 may be used not only as a load region for each program, but also as a storage region in which data and the like output during operations of various hardware and various types of control are temporarily stored.

The display control device 104 performs display control of displaying various screens related to the raising game on the display 110. In the present embodiment, the display control device 104 also includes, for example, a rendering device such as a graphics chip or a graphics processing unit (GPU), and executes rendering processing of generating various screens related to the raising game. The display control device 104 includes a rendering memory (not shown), loads various pieces of graphics data read from the storage device 102, and performs a predetermined calculation to generate various images (screens) related to the raising game. The screen or image generated by the display control device 104 is presented to the user, for example, by being displayed on the display 110 provided in the portable game device 100.

The operation I/F 105 is a user interface that receives operation input, which is provided in the portable game device 100. When the operation input is detected, the operation I/F 105 outputs, to the processor 101, a control signal corresponding to the operation input. In an aspect in which the display 110 is capable of detecting touch input, the operation I/F 105 include a touch input detection sensor provided in the display 110. Further, the operation I/F 105 includes various operation members (for example, buttons, dials, and the like) provided on an exterior of the portable game device 100. For example, the operation I/F 105 includes a press sensor capable of detecting a press on the lower operation portion 120 and the side operation portion 130, and a rotation sensor capable of detecting a rotation of the side operation portion 130.

The communication I/F 106 is a communication interface with an external device, which is provided in the portable game device 100. The portable game device 100 according to the present embodiment is provided with a connection terminal (not shown), and enables information communication with another portable game device 100 by connecting connection terminals to each other.

### Operation Members

Various operation members of the portable game device 100 will be described in more detail with reference to Fig. 1. As described above, the operation member includes the button type lower operation portion 120 and the dial push type side operation portion 130.

In the example of Fig. 1, the lower operation portion 120 is provided below the display 110 as an operation member having three types of functions. In an aspect, the lower operation portion 120 includes buttons 121 to 123. On a surface of the portable game device 100 on which the display 110 is disposed, the lower operation portion 120 is provided below the display 110. The button 121 is a selection button for changing a selected state of a display item displayed on the display 110. The button 122 is a determination button for determining execution of a function corresponding to the display item in the selected state. The button 123 is a cancel button for canceling execution of a function of a determined item and returning to a previous display screen (stage).

The side operation portion 130 is provided in a manner of protruding from the body portion 100a along the axis 141 extending in a radial direction of the portable game device 100 from a side of the display 110. The side operation portion 130 includes a rotation mechanism rotatable about the axis 141 and a press mechanism capable of being pressed along the axis 141. The user can perform the operation input to the side operation portion 130 by rotating the rotation mechanism or pressing the press mechanism.

The rotation mechanism of the side operation portion 130 is rotatable about the axis 141 in a clockwise direction 142 and a counterclockwise direction 143. The operation I/F 105 is capable of outputting information regarding whether rotation operation output made to the side operation portion 130 is in the clockwise direction 142 or the counterclockwise direction 143. Further, the press mechanism of the side operation portion 130 can be pressed in the pressing direction 144 along the axis 141. The operation I/F 105 is capable of outputting information representing that press operation input made to the side operation portion 130 is press operation input in the pressing direction 144.

The side operation portion 130 is mainly used for receiving operation input for switching a display form of a display element displayed in association with the character as a raising target in the raising game. The display element refers to various graphics constituting a screen displayed on the display 110 in relation to the raising game.

For example, the side operation portion 130 is used as an operation member for enlarging or reducing a display content displayed on the display 110 in the raising game executed in the portable game device 100. Specifically, the side operation portion 130 is used as an operation member for enlarging or reducing a display of a virtual space in which the appearing character is present in the raising game executed in portable game device 100. Further, the side operation portion 130 is used as an operation member for switching a selection target among a plurality of options displayed on the display 110 in the raising game executed in the portable game device 100. In addition, the side operation portion 130 is used as an operation member for determining and instructing execution of a function corresponding to the display content displayed on the display 110 in the raising game executed in the portable game device 100. The side operation portion 130 may be used for changing the display item in the selected state in relation to a function selection.

### Side Operation Portion 130

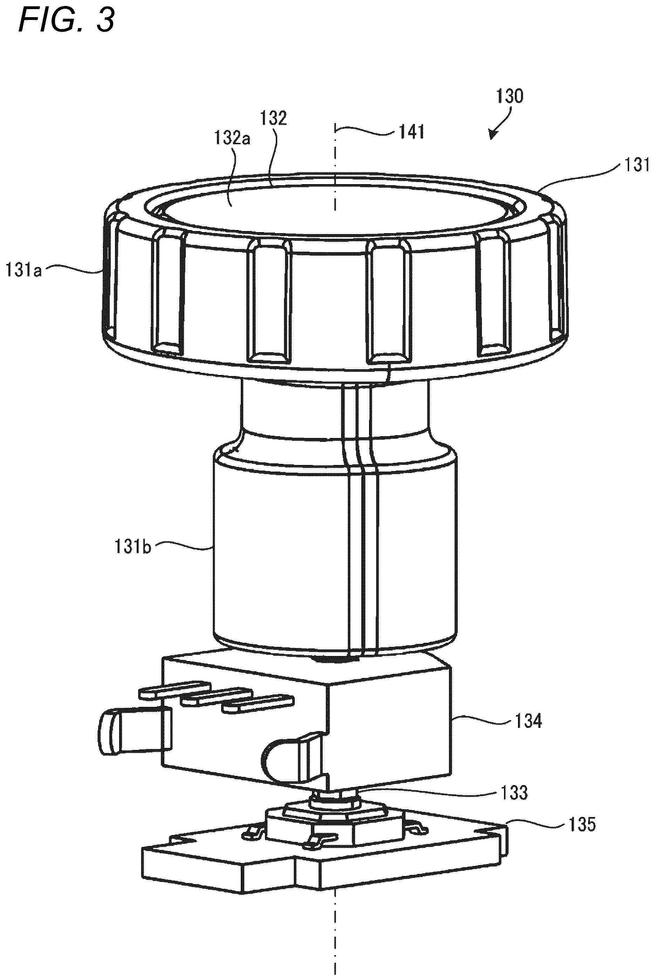

Next, a configuration of the side operation portion 130 will be described in more detail with reference to Figs. 3 to 10.

Fig. 3 is a perspective view of the side operation portion 130. As shown in Fig. 3, the side operation portion 130 includes a rotation operation portion 131 and a press operation portion 132. The rotation operation portion 131 is an operation portion that enables the rotation operation about the axis 141. The press operation portion 132 is an operation portion that enables the press operation along the axis 141. The rotation operation portion 131 is an example of a "first operation portion" of the present disclosure. The press operation portion 132 is an example of a "second operation portion" of the present disclosure.

The rotation operation portion 131 includes a ring-shaped rotation ring 131a that receives the rotation operation about the axis 141, and a cylindrical hollow shaft portion 131b that extends from the rotation ring 131a along the axis 141 in the pressing direction 144 (see Fig. 1). The press operation portion 132 includes a press button 132a that receives the press operation along the axis 141. The press button 132a is disposed inside the rotation ring 131a. The press button 132a is displaced in the pressing direction 144 (direction toward a body portion 100a) along the axis 141 when being pressed. The rotation operation portion 131 and the press operation portion 132 have the common axis 141 and are provided on, for example, an upper side portion of the body portion 100a. The side operation portion 130 in Fig. 1 shows a state in which a part of the rotation ring 131a and the hollow shaft portion 131b is visible. The rotation ring 131a is an example of a "peripheral portion" of the present disclosure. The press button 132a is an example of a "press portion" of the present disclosure.

The side operation portion 130 includes a shaft member 133, a rotation sensor 134, and a press sensor 135. The shaft member 133 is a member that rotates in response to the rotation of the rotation operation portion 131 and is pressed in response to the press on the press operation portion 132. The rotation sensor 134 is a sensor that detects the rotation of the shaft member 133. The press sensor 135 is a sensor that detects the press on the shaft member 133. The rotation sensor 134 can detect a rotation amount of the rotation operation portion 131 by detecting the rotation of the shaft member 133. The press sensor 135 can detect the press on the press operation portion 132 by detecting the press on the shaft member 133. The shaft member 133, the rotation sensor 134, and the press sensor 135 are provided on a pressing direction 144 side (lower side in Fig. 3) of the hollow shaft portion 131b along the axis 141. The shaft member 133 is an example of a "first member" of the present disclosure. The rotation sensor 134 is an example of a "rotation detector" of the present disclosure. The press sensor 135 is an example of a "press detector" of the present disclosure.

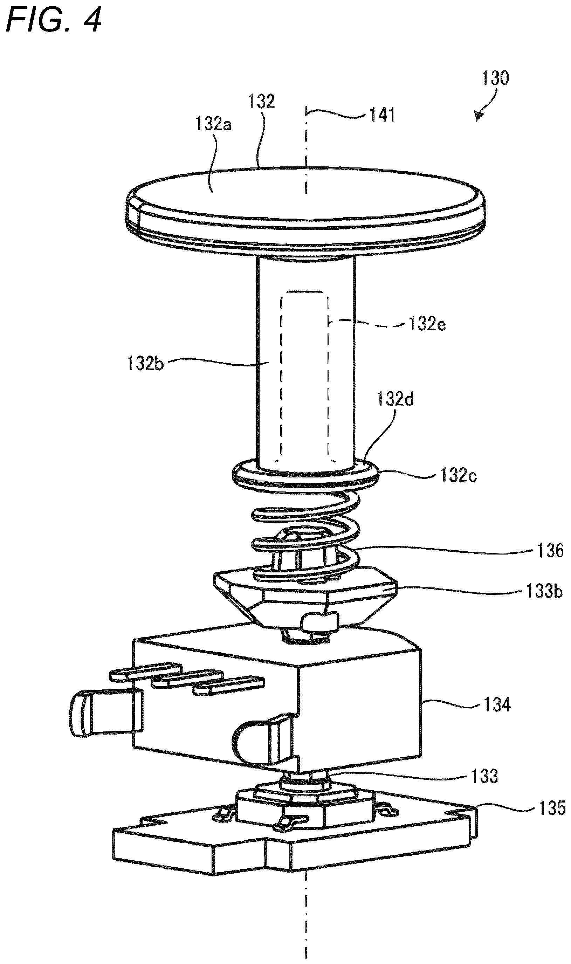

Fig. 4 is a perspective view showing the side operation portion 130 in a state in which the rotation operation portion 131 is removed from the side operation portion 130 shown in Fig. 3. As shown in Fig. 4, the press operation portion 132 of the side operation portion 130 includes the press button 132a having a disk shape, and a cylindrical hollow shaft portion 132b continuous with the press button 132a and extending in the pressing direction 144 (see Fig. 1) along the axis 141. In the press operation portion 132, the press button 132a is disposed inside the rotation ring 131a in the rotation operation portion 131, and the hollow shaft portion 132b is disposed inside the rotation ring 131a and the hollow shaft portion 131b in the rotation operation portion 131.

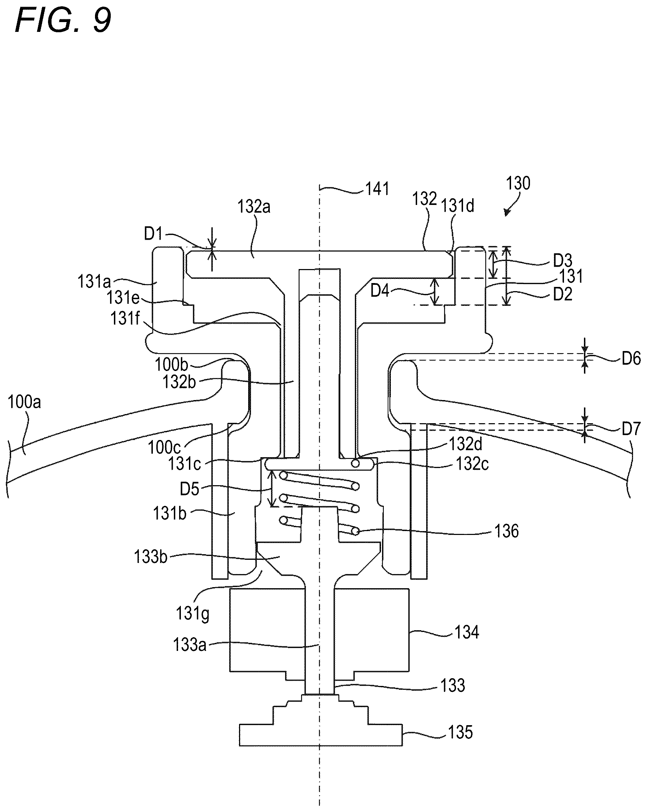

The press operation portion 132 includes a friction member 132c. The friction member 132c is made of, for example, a metal rivet. The friction member 132c includes an abutment portion 132d formed in a disk shape, and a columnar insertion portion 132e continuous with the abutment portion 132d and extending in a direction opposite to the pressing direction 144 of the press button 132a along the axis 141. The abutment portion 132d is a portion that abuts against a regulating portion 131c (to be described below with reference to Fig. 9) provided in the rotation operation portion 131. A diameter of the abutment portion 132d is larger than a diameter of the hollow shaft portion 132b. The insertion portion 132e is a portion fitted into a hollow of the hollow shaft portion 132b. The friction member 132c is provided in a state in which the insertion portion 132e is fitted into the hollow shaft portion 132b from the direction opposite to the pressing direction 144 and the abutment portion 132d protrudes outward from an outer periphery of the hollow shaft portion 132b. The friction member 132c may be a member that generates a large friction between the friction member 132c and the regulating portion 131c that abuts against the friction member 132c, and may be made of, for example, a rubber or silicon.

The shaft member 133 is provided with a rotation engagement portion 133b that engages with the rotation operation portion 131. The rotation engagement portion 133b is provided on an upper portion of the shaft member 133. The rotation sensor 134 is provided below the rotation engagement portion 133b, and the press sensor 135 is provided below the rotation sensor 134.

A spring 136 is provided along the axis 141 between the friction member 132c of the press operation portion 132 and the rotation engagement portion 133b of the shaft member 133. The press operation portion 132 is biased in the direction opposite to the pressing direction 144 of the press operation portion 132 (direction toward an outside of the body portion 100a) by a biasing force of the spring 136 with respect to the friction member 132c. On the other hand, the shaft member 133 is biased in the pressing direction 144 of the press operation portion 132 by the biasing force of the spring 136 with respect to the rotation engagement portion 133b. The spring 136 is an example of an "elastic member" of the present disclosure. The direction opposite to the pressing direction 144 is an example of a "second direction" of the present disclosure.

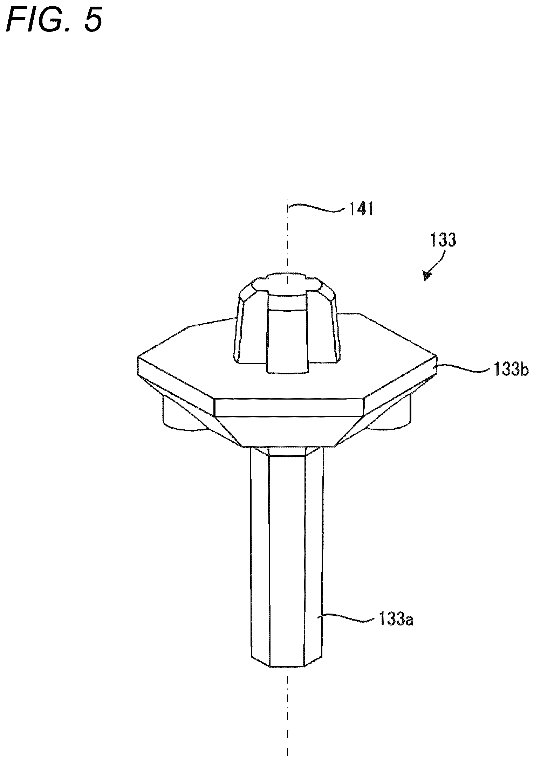

Fig. 5 is a perspective view of the shaft member 133. As shown in Fig. 5, the shaft member 133 includes a shaft portion 133a and the rotation engagement portion 133b. The shaft portion 133a is provided along the axis 141 and is a detected portion detected by the rotation sensor 134 and the press sensor 135. The rotation engagement portion 133b is formed wider than the shaft portion 133a when viewed in a direction of the axis 141. The shaft portion 133a and the rotation engagement portion 133b are formed in, for example, a hexagonal shape when viewed in the direction of the axis 141. The rotation engagement portion 133b engages with the rotation operation portion 131 in a rotation direction about the axis 141. Since the rotation engagement portion 133b is formed wider than the shaft portion 133a, a space is ensured between the shaft member 133 and the press operation portion 132 to place the spring 136 that connects the two members as shown in Fig. 4.

The rotation sensor 134 and the press sensor 135 are attached to the shaft portion 133a. The rotation sensor 134 is disposed so as to surround the shaft portion 133a, for example, and detects a rotation of the shaft portion 133a. The press sensor 135 is disposed to face a bottom of the shaft portion 133a, for example, and detects movement of the shaft portion 133a in the pressing direction 144. The rotation sensor 134 and the press sensor 135 connected to the shaft portion 133a are connected to the operation I/F 105. A rotation detection signal of the shaft portion 133a detected by the rotation sensor 134 and a press detection signal of the shaft portion 133a detected by the press sensor 135 are output to the operation I/F 105.

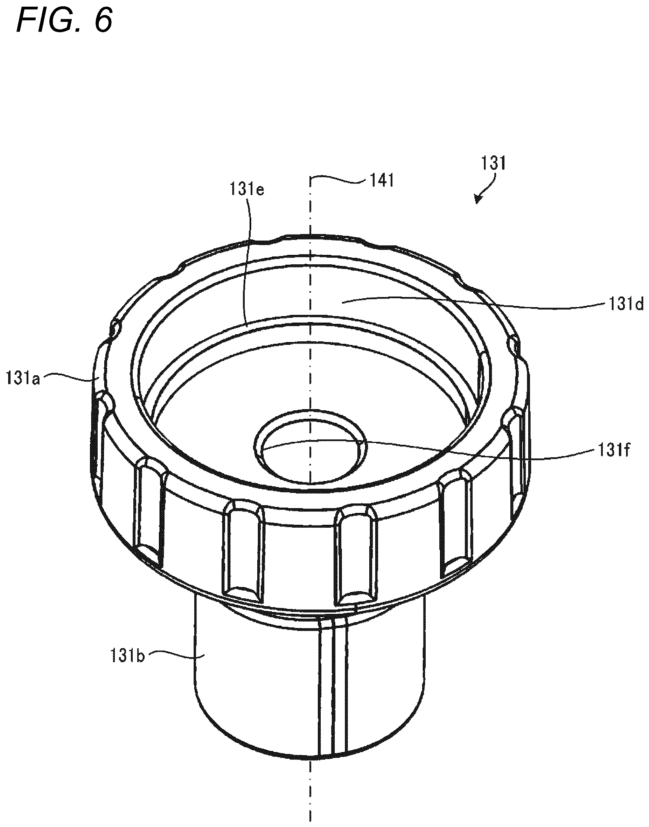

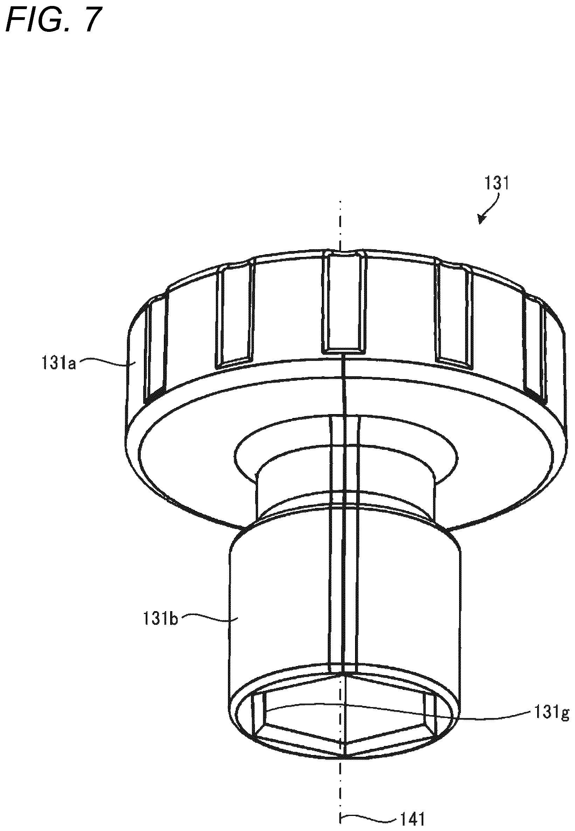

Fig. 6 is a perspective view of the rotation operation portion 131 as viewed from above. Fig. 7 is a perspective view of the rotation operation portion 131 as viewed from below. "Above" is a direction opposite to the pressing direction 144 of the press button 132a. "Below" is the pressing direction 144 of the press button 132a.

As shown in Fig. 6, the rotation ring 131a of the rotation operation portion 131 is provided with a hole 131d in which the press button 132a of the press operation portion 132 is disposed. A regulating portion 131e is formed at a lower portion of the hole 131d. The regulating portion 131e is a portion protruding inward from an inner peripheral surface of the hole 131d, and is a portion formed to have a diameter slightly smaller than a diameter of the hole 131d. When the press button 132a is pressed in the pressing direction 144, the regulating portion 131e abuts against a lower surface of the press button 132a to determine a position of the press button 132a in a pressed state.

The hollow shaft portion 131b of the rotation operation portion 131 is provided with a circular hole 131f into which the hollow shaft portion 132b of the press operation portion 132 is inserted. In addition to the hollow shaft portion 132b, the abutment portion 132d of the friction member 132c is also inserted into the hole 131f of the hollow shaft portion 131b. Therefore, a size (diameter) of the hole 131f differs depending on a location, and is formed to correspond to a size of each of the hollow shaft portion 132b and the abutment portion 132d to be inserted. The size of the hole 131f will be described later with reference to Fig. 9.

As shown in Fig. 7, a lower portion of the hollow shaft portion 131b is provided with a hexagonal columnar hole 131g with which the rotation engagement portion 133b of the shaft member 133 engages. The hole 131g is formed to communicate with the hole 131f. The hole 131g will also be described later with reference to Fig. 9.

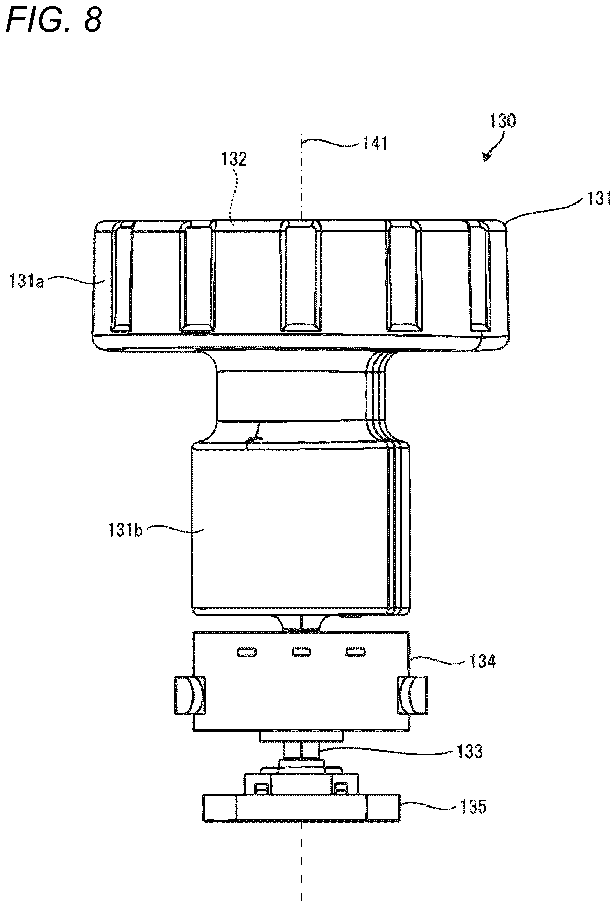

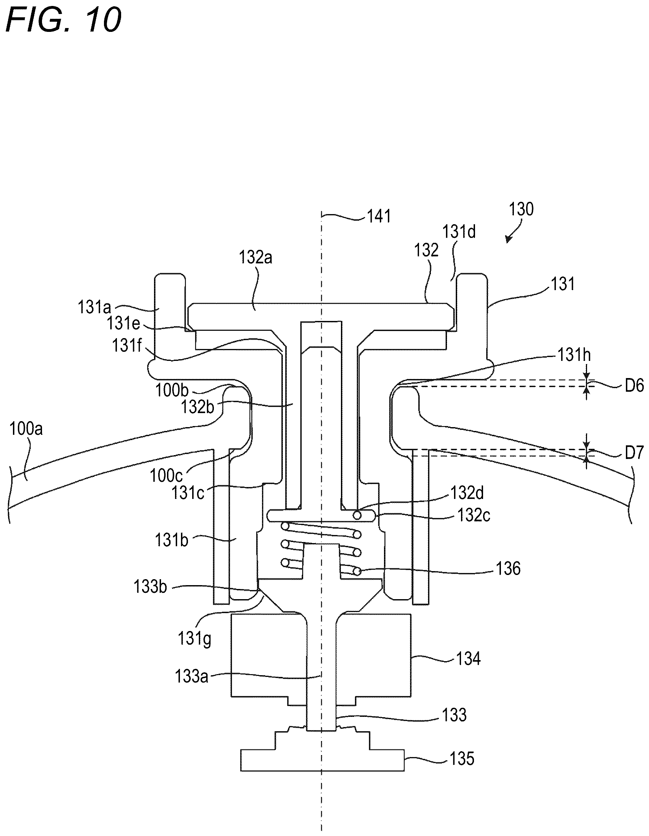

Fig. 8 is a side view of the side operation portion 130. Fig. 9 is a cross-sectional view of the side operation portion 130 in an unpressed state of the press button 132a. Fig. 10 is a cross-sectional view of the side operation portion 130 in the pressed state of the press button 132a.

As shown in Fig. 9, in the press operation portion 132, in the unpressed state of the press button 132a, an end portion (press surface) of the press button 132a on a side in the direction opposite to the pressing direction 144 is located on a pressing direction side with respect to an end portion of the rotation ring 131a on a side in the same opposite direction. That is, the press operation portion 132 is disposed in a state in which the press button 132a is recessed by a slight amount D1 in the rotation ring 131a when the press button 132a is not pressed.

As shown in Figs. 9 and 10, the diameter of the hole 131f in the hollow shaft portion 131b of the rotation operation portion 131 is formed such that a diameter of a portion into which the hollow shaft portion 132b is inserted is smaller than a diameter of a portion into which the friction member 132c is inserted. Therefore, a stepped portion formed due to a difference in diameter is provided on an inner peripheral portion of the hole 131f, and the stepped portion serves as the regulating portion 131c against which the abutment portion 132d of the friction member 132c abuts.

The friction member 132c is biased in the direction opposite to the pressing direction 144 by the biasing force of the spring 136 in the unpressed state of the press button 132a, and the abutment portion 132d abuts against the regulating portion 131c of the rotation operation portion 131. The regulating portion 131c abuts against the abutment portion 132d of the friction member 132c to regulate movement of the press operation portion 132 in the direction opposite to the pressing direction 144. Further, the regulating portion 131c abuts against the abutment portion 132d of the friction member 132c to generate a frictional force between the regulating portion 131c and the abutment portion 132d.

Accordingly, in the unpressed state of the press button 132a, when the rotation ring 131a of the rotation operation portion 131 is rotated, the press operation portion 132 is rotatable about the axis 141 in conjunction with the rotation of the rotation operation portion 131 by the friction between the abutment portion 132d and the regulating portion 131c. That is, when the press button 132a is not pressed, the press operation portion 132 rotates integrally with the rotation operation portion 131 as the rotation operation portion 131 rotates.

As described above, the regulating portion 131c of the rotation operation portion 131 has a function of determining a position of the press operation portion 132 in the "unpressed state" and rotating the press operation portion 132 by abutting against the abutment portion 132d in the "unpressed state" of the press operation portion 132.

A depth D2 of the hole 131d in the rotation ring 131a of the rotation operation portion 131 is formed to be larger than a thickness D3 of the press button 132a of the press operation portion 132 disposed in the rotation ring 131a. Further, the hollow shaft portion 132b of the press operation portion 132 is slidably inserted into the hole 131f of the hollow shaft portion 131b of the rotation operation portion 131 along the axis 141. Therefore, the rotation operation portion 131 is configured not to move in the pressing direction in conjunction with the movement of the press operation portion 132 when the press operation portion 132 is pressed. That is, the press operation on the press operation portion 132 can be performed while maintaining a position of the rotation operation portion 131.

A distance D4 obtained by subtracting the thickness D3 of the press button 132a and an amount D1 of the recess of the press button 132a from the depth D2 of the hole 131d is smaller than a distance D5 from the friction member 132c in the hole 131f of the hollow shaft portion 131b to an upper end portion of the shaft portion 133a of the shaft member 133. Therefore, even if the press button 132a is pressed into the hole 131d, the position of the press button 132a in the pressed state is regulated by the regulating portion 131e, so that the friction member 132c sliding along the axis 141 does not come into direct contact with the shaft portion 133a. As a result, even when the press button 132a is pressed with a strong force, it is possible to prevent the press sensor 135 from being strongly pressed.

When the rotation operation portion 131 of the side operation portion 130 is attached to the body portion 100a, the movement of the rotation operation portion 131 along the axis 141 is regulated by a regulating portion 100b and a regulating portion 100c provided on the body portion 100a. Specifically, when the side operation portion 130 is attached to the body portion 100a, the regulating portions 100b and 100c of the body portion 100a are fitted into a recessed portion 131h provided in the hollow shaft portion 131b of the rotation operation portion 131.

Accordingly, for example, when the rotation operation portion 131 is pressed along the axis 141 in the pressing direction 144 toward the body portion 100a, a lower surface of the rotation ring 131a abuts against the regulating portion 100b of the body portion 100a, and thus the movement of the rotation operation portion 131 in the pressing direction 144 is regulated to be less than a movement amount D6 in the state shown in Figs. 9 and 10, for example. Further, when the rotation operation portion 131 is pulled along the axis 141 in the direction opposite to the pressing direction 144 toward the outside of the body portion 100a, an outer peripheral wall of the hollow shaft portion 131b abuts against the regulating portion 100c of the body portion 100a, and thus the movement of the rotation operation portion 131 in the direction opposite to the pressing direction 144 is regulated to be less than a movement amount D7 in the state shown in Figs. 9 and 10, for example. The movement of the rotation operation portion 131 in the pressing direction 144 includes movement caused by the press on the rotation ring 131a of the rotation operation portion 131 and movement caused by a press on the regulating portion 131e of the rotation ring 131a when the press button 132a of the press operation portion 132 is pressed.

Further, in the rotation operation portion 131, the hole 131g of the hollow shaft portion 131b is engaged with the rotation engagement portion 133b of the shaft member 133 in the rotation direction about the axis 141. The shaft member 133 engaged with the hole 131g of the rotation operation portion 131 is inserted into the rotation operation portion 131 in a manner of being slidable in the direction of the axis 141. Further, the rotation engagement portion 133b is biased in the pressing direction 144 by the biasing force of the spring 136 in the pressed state of the press button 132a. Therefore, the shaft member 133 rotates about the axis 141 in response to the rotation of the rotation operation portion 131. Further, the shaft member 133 is pressed along the axis 141 in response to the press on the press operation portion 132.

The rotation of the shaft member 133 is detected by the rotation sensor 134. The press on the shaft member 133 is detected by the press sensor 135. The rotation operation portion 131 is connected to the processor 101 via the rotation sensor 134 and the operation I/F 105. The press operation portion 132 is connected to the processor 101 via the press sensor 135 and the operation I/F 105. The processor 101 controls the progress of the raising game based on detection results of the rotation sensor 134 and the press sensor 135.

When the press button 132a of the press operation portion 132 is pressed, the abutment portion 132d of the friction member 132c is separated from the regulating portion 131c of the hollow shaft portion 131b, connection (by friction) between the rotation operation portion 131 and the friction member 132c is released, and connection in the rotation direction between the rotation operation portion 131 and the press operation portion 132 is released. Therefore, in a state in which the press operation portion 132 is pressed, the press operation portion 132 does not rotate in conjunction with the rotation of the rotation operation portion 131. Therefore, in the state in which the press button 132a is pressed, the rotation operation portion 131 rotates independently of the press operation portion 132 being pressed. Accordingly, for example, the rotation operation portion 131 can rotate while the press operation portion 132 is pressed.

### Outline of Game

A game in which a play experience is provided in the portable game device 100 according to the present embodiment is, for example, a raising game in which a raising element of a character, a communication element between a user and the character, and an interaction element between characters are provided as interesting elements. In the raising game, the user can raise the character by performing operation input related to care for the character. The raising game starts with, for example, hatching an egg, and as the player sequentially performs operation input related to necessary care, the character progresses through the growth stages, and an appearance changes as the character grows.

### Outline of Switching of Display Form

The raising game is provided with various functions for progressing the game. On the other hand, in order to use a specific function, an aspect in which the user searches for and selects the function from a function list in which all functions are arranged forces the user to perform complicated operation input particularly in a case in which various functions are provided.

Therefore, in the raising game of the present embodiment, a plurality of types of display forms are provided for a screen related to the character, and the types of available functions are different for each display form. The functions available in each display form are related to a content displayed as a screen in the display form. Accordingly, the user can easily and intuitively understand which display form is selected to use a desired function, and can easily select the desired function from a function group after switching the screen to a display form that is highly relevant to the function.

In the portable game device 100 according to the present embodiment, the switching of the display form can be performed by operating the side operation portion 130 as described above. The raising game has a plurality of types of display forms, and by operating the side operation portion 130, the user can play the raising game on a screen having a display form different from a currently displayed display form.

Each display form includes graphics of at least one of the character and an environment in the raising game in which the character is disposed. As will be described later, each of the display forms is associated with a concept of a display scale related to the raising game, and the screen related to the character is displayed in different scaling modes. That is, the operation on the side operation portion 130 corresponds to the enlargement and reduction operation of the screen, and by performing the rotation operation input to the rotation ring 131a, the user can switch the display form of the screen to a different scaling mode and play the raising game. As described above, the rotation ring 131a is capable of detecting two types of operation input corresponding to the clockwise direction 142 and the counterclockwise direction 143, respectively, and receives an enlargement instruction for further enlarging and displaying the display element by the rotation operation in the former direction, and a reduction instruction for further reducing and displaying the display element by the rotation operation in the latter direction. Therefore, for example, when operation input for rotating the rotation ring 131a in the clockwise direction 142 is made, the screen displayed on the display 110 is switched to a display form corresponding to a display scale enlarged by one level from the current display form. Further, when operation input for rotating the rotation ring 131a in the counterclockwise direction 143 is made, the screen displayed on the display 110 is switched to a display form corresponding to a display scale reduced by one level from the current display form. Hereinafter, the raising game of the present embodiment will be described assuming that four types of display forms respectively corresponding to different scaling modes are provided.

### Display Forms

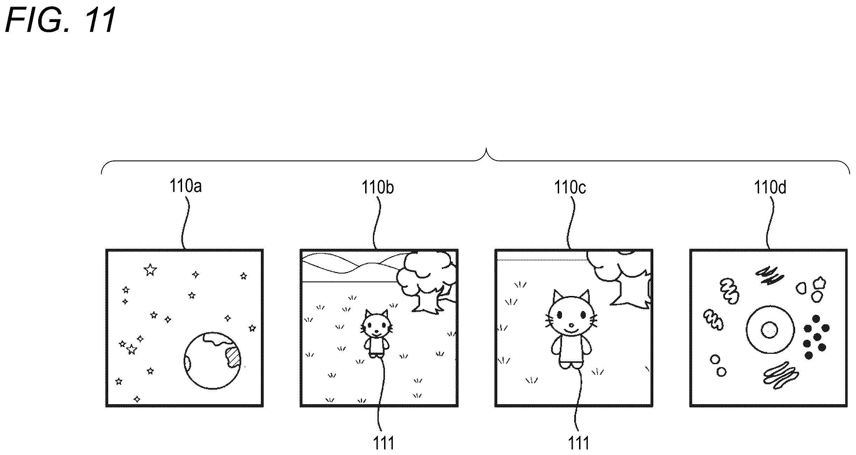

Hereinafter, the four types of display forms provided in a switchable manner in the raising game of the present embodiment will be specifically described with reference to the drawings. Fig. 11 is a diagram illustrating various display forms that can be switched in the raising game according to the embodiment of the present disclosure. The four types of display forms provide display screens related to the character in different scaling modes, and hereinafter, the display forms will be described in ascending order of the display scale of the character on the display screen (in descending order of a display range of a space).

### Wide Area Display

For example, as shown in a display image 110a, a wide area display does not include graphics showing the appearance of the character, and is in a display form in which the environment in which the character is disposed is captured from a macro viewpoint. In the raising game of the present embodiment, it is assumed that the environment in which the character is raised is one planet provided uniquely to the game device, and an appearance of the planet is displayed on the display 110 in the wide area display. In the wide area display, the display image 110a is configured to provide an overhead view of the planet, which is a field on which the character is disposed, in outer space.

### Field Display

A field display is in a display form that provides a viewpoint focused on a part of an area (field) distributed on the planet, as shown in a display image 110b, for example. The field display is basically in a display form that allows the user to observe a character 111 and ecology of the character 111 on the planet. Unlike the wide area display, the field display includes graphics indicating an appearance of the character 111.

### Character Display

For example, as shown in a display image 110c, a character display is in a display form that is more specialized for displaying the character 111 than the field display, and provides a display screen in a mode of enlarging the character 111 in the field display and graphics of a background. In the character display, the graphics showing the appearance of the character 111 is mainly displayed. In the raising game of the present embodiment, the character display is in a display form that allows a use of various functions for taking care of the character 111 which directly affect the character 111 in the raising game.

### In-body Display

For example, as shown in a display image 110d, an in-body display is a display form specialized for presenting, to the user, a change occurring in a body of the character 111 instead of a change occurring in an outer surface of the character 111. That is, the in-body display is a display form in which the character 111 is captured from a micro viewpoint. The in-body display is not in a display form showing the appearance of the character 111 but in a display form showing an inside of a body of the character 111, and in the present embodiment, a display image 110d is formed in a form of displaying cells present in the body of the character 111.

These display forms can be switched by the rotation operation input to the rotation ring 131a of the rotation operation portion 131 as described above. Since the four types of display forms are modes in which the display element is displayed in an enlarged manner in the order of the wide area display, the field display, the character display, and the in-body display, and the display forms are switched in the order by the rotation operation on the rotation ring 131a in the clockwise direction 142. On the contrary, since the four types of display forms are modes in which the display element is displayed in a reduced manner in the order of the in-body display, the character display, the field display, and the wide display, the display forms are switched in the order by the rotation operation on the rotation ring 131a in the counterclockwise direction 143. After the display form is switched by the rotation ring 131a, the execution of the function corresponding to the display content to be displayed can be determined by pressing the press button 132a of the press operation portion 132.

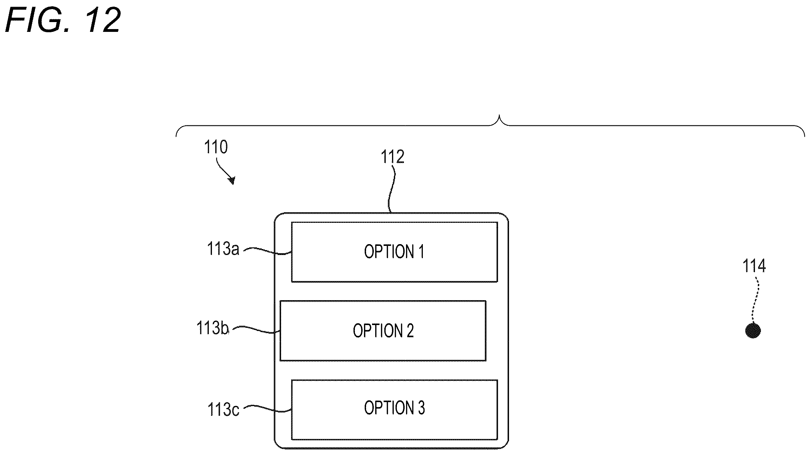

Fig. 12 is a diagram showing another example of the switchable display form. The switching of the display form based on the operation on the side operation portion 130 may be switching of the selection target among the plurality of options displayed on the display 110 in the raising game.

As shown in Fig. 12, the display 110 displays a selection screen 112 on which any option can be selected from the plurality of (for example, n) options. On the selection screen 112, for example, three options are sequentially displayed in order in upper, middle and lower rows. The selection screen 112 shown in FIG. 12 displays an "OPTION 1" 113a in the upper row, an "OPTION 2" 113b in the middle row, and an "OPTION 3" 113c in the lower row.

The options displayed on the selection screen 112 can be switched by the rotation operation input to the rotation ring 131a of the rotation operation portion 131. For example, by rotating the rotation ring 131a in the clockwise direction 142, the options displayed on the selection screen 112 can scroll upward. On the other hand, by rotating the rotation ring 131a in the counterclockwise direction 143, the options displayed on the selection screen 112 can scroll downward. For example, on the selection screen 112 shown in Fig. 12, when the rotation ring 131a is rotated in the clockwise direction 142, the options scroll upward and a display thereof is switched to one in which the "OPTION 2" 113b is in the upper row, the "OPTION 3" 113c is in the middle row, and an "OPTION 4" (not shown) is in the lower row. On the other hand, on the selection screen 112 shown in Fig. 12, when the rotation ring 131a is rotated in the counterclockwise direction 143, the options scroll upward and a display thereof is switched to one in which an "OPTION n" 113n is in the upper row, the "OPTION 1" 113a is in the middle row, and the "OPTION 2" 113b is in the lower row.

In the selection screen 112, the option displayed in the middle row is the selection target. The selection of the option can be determined by pressing the press button 132a of the press operation portion 132. Therefore, when the press button 132a is pressed, the option displayed in the middle row of the selection screen 112 at the time of pressing is determined as the selection target. For example, when the press button 132a is pressed on the display of the selection screen 112 shown in Fig. 12, the "OPTION 2" 113b displayed in the middle row is determined as the option to be selected.

As shown in Fig. 12, on the selection screen 112, a display position of the "OPTION 2" 113b in the middle row among the "OPTION 1" 113a, the "OPTION 2" 113b, and the "OPTION 3" 113c displayed in the upper, middle, and lower rows is displayed in a manner of slightly being shifted to the left as compared with display positions of the "OPTION 1" 113a in the upper row and the "OPTION 3" 113c in the lower row. With such a display form of the options, for example, when the rotation ring 131a is rotated in the clockwise direction 142, the plurality of options displayed on the selection screen 112 can be displayed in such a way that the options rotate clockwise around a virtual position on the right of the body portion 100a (for example, a virtual point 114 on a right-hand side of the "OPTION 2" 113b). Similarly, when the rotation ring 131a is rotated in the counterclockwise direction 143, the plurality of options displayed on the selection screen 112 can be displayed in such a way that the options rotate counterclockwise around the position on the right of the body portion 100a.

As described above, the portable game device 100 according to the present aspect includes the rotation operation portion 131 enabling the rotation operation about the axis 141 and the press operation portion 132 enabling the press operation along the axis 141 on the upper side portion of the body portion 100a in the front view of the display 110, and the raising game progresses in response to the operations on the rotation operation portion 131 and the press operation portion 132. According to this configuration, by the rotation operation on the rotation operation portion 131, it is possible to easily perform continuous bidirectional operation input to the game, and to intuitively increase or decrease an amount of operation. Further, it is possible to easily and reliably perform the operation input different from that of the rotation operation portion 131 with respect to the game by the press operation on the press operation portion 132. Accordingly, it is possible to operate the rotation operation portion 131 and the press operation portion 132 provided on the upper side portion of the body portion 100a having the common axis 141 while selectively using the two depending on the progress of the game, and it is possible to provide a highly interesting game experience.

In the portable game device 100, the press button 132a of the press operation portion 132 is disposed inside the rotation ring 131a of the rotation operation portion 131, and in the unpressed state of the press button 132a, the end portion (press surface) of the press button 132a on a side opposite to the body portion 100a side is provided in a manner of being located closer to the body portion 100a side than the end portion of the rotation ring 131a on a side opposite to the body portion 100a side. According to this configuration, since contact with the press button 132a from an outside except when necessary (when performing the determination) can be prevented by the rotation ring 131a, unnecessary operation on the press button 132a can be reduced, and a highly interesting game can be provided.

Further, the portable game device 100 is configured such that even when the press button 132a of the press operation portion 132 is pressed, the rotation operation portion 131 is not pressed in the direction of the axis 141 in conjunction with the press operation. For example, in a case of a structure in which the rotation operation portion 131 and the press operation portion 132 are pressed integrally as the press operation portion 132 is pressed, such as a crown of a watch, a large load is applied due to the press, and an operation portion is easily broken. On the other hand, according to the configuration of the portable game device 100, since the rotation operation portion 131 functions as a guard member of the press operation portion 132, even when the side operation portion 130 (rotation operation portion 131 and press operation portion 132) is roughly operated and an impact such as a strong push is applied to the body portion 100a, the operation portion can be made less likely to be broken.

In the portable game device 100, when the rotation ring 131a of the rotation operation portion 131 is rotated in the unpressed state of the press button 132a, the press operation portion 132 rotates integrally with the rotation operation portion 131 due to the friction between the abutment portion 132d and the regulating portion 131c as the rotation operation portion 131 rotates. By adopting the structure in which the rotation operation portion 131 is not pressed in conjunction with the press on the press operation portion 132 as described above, and by rotating the press operation portion 132 in conjunction with the rotation of the rotation operation portion 131 as in this configuration, it is possible to obtain an operating feel similar to that of a crown of a watch, and to provide a highly interesting game.

A control method for the game device described in the above embodiment can be achieved by executing a management program prepared in advance on a computer. The control program is recorded in a computer-readable storage medium and executed by being read from the storage medium. The control program may be provided in a form stored in a non-transitory storage medium such as a flash memory, or may be provided via a network such as the Internet. The computer that executes the control program may be included in the game device, may be included in an electronic device such as a smartphone, a tablet terminal, or a personal computer capable of communicating with the game device, or may be included in a server device capable of communicating with the game device and the electronic device.

A portable game device of the present disclosure executes an electronic game. The portable game device includes: a first operation portion enabling a rotation operation about a first axis; a second operation portion enabling a press operation in a first direction along the first axis; and a controller configured to control a progress of the electronic game in response to an operation on at least one of the first operation portion and the second operation portion.

The portable game device may further include: a body portion including the controller. The first operation portion and the second operation portion may be provided in a manner of protruding from the body portion along the first axis, and the press operation in the first direction may be an operation of displacing the second operation portion toward the body portion.

The first operation portion may include a peripheral portion that receives the rotation operation, and the second operation portion may include a press portion that receives the press operation and is disposed inside the peripheral portion.

In an unpressed state of the press portion, an end portion of the press portion on a side opposite to a body portion side may be located closer to the body portion than an end portion of the peripheral portion on the side opposite to the body portion side.

The first operation portion may not be pressed in conjunction with the press operation on the second operation portion.

The second operation portion may be rotatable about the first axis in conjunction with rotation of the first operation portion.

In a state in which the second operation portion is pressed, the second operation portion does not rotate in conjunction with the rotation of the first operation portion.

The portable game device may further include a first member that rotates in response to rotation of the first operation portion and is pressed in response to a press on the second operation portion; a rotation detector configured to detect rotation of the first member; and a press detector configured to detect press on the first member. The controller controls the progress of the electronic game based on detection results of the rotation detector and the press detector.

The first operation portion may engage with the first member in a rotation direction about the first axis and is slidable in a direction of the first axis, an elastic member may be provided between the second operation portion and the first member, and the second operation portion is biased in a second direction opposite to the first direction by a biasing force of the elastic member.

The first operation portion may include a regulating portion that regulates movement of the second operation portion in the second direction, the second operation portion may include an abutment portion that abuts against the regulating portion by the biasing force of the elastic member in an unpressed state, and the first operation portion and the second operation portion may integrally rotate by a friction between the abutment portion and the regulating portion in the unpressed state of the second operation portion.

The first member may include: a shaft portion along the first axis, the shaft portion being a detected portion detected by the rotation detector and the press detector; and a rotation engagement portion that is wider than the shaft portion when viewed in the direction of the first axis, engages with the first operation portion in the rotation direction about the first axis, and is slidable in the direction of the first axis.

The first operation portion may enable scaling a display content in the electronic game.

The first operation portion may enable scaling in a display of a virtual space in which a character appearing in the electronic game is present.

The first operation portion may enable switching a selection target among a plurality of options in the electronic game.

The second operation portion may enable a determination instruction in the electronic game.

A non-transitory computer-readable storage medium of the present disclosure stores a control program for causing a portable game device to perform a process. The portable game device executes an electronic game and includes a first operation portion enabling a rotation operation about a first axis, a second operation portion enabling a press operation in a first direction along the first axis, and a processor, and the process includes: controlling a progress of the electronic game in response to an operation on at least one of the first operation portion and the second operation portion.

According to the present disclosure, it is possible to provide a portable game device and a control program that can provide a highly interesting game experience.

## Claims

1. A portable game device (100) that executes an electronic game, the portable game device (100) comprising:
a first operation portion (131) enabling a rotation operation about a first axis;
a second operation portion (132) enabling a press operation in a first direction along the first axis; and
a controller (101) configured to control a progress of the electronic game in response to an operation on at least one of the first operation portion (131) and the second operation portion (132).

2. The portable game device (100) according to claim 1, further comprising:
a body portion (100a) including the controller (101), wherein
the first operation portion (131) and the second operation portion (132) are provided in a manner of protruding from the body portion (100a) along the first axis, and
the press operation in the first direction is an operation of displacing the second operation portion (132) toward the body portion.

3. The portable game device (100) according to claim 2, wherein
the first operation portion (131) includes a peripheral portion (131a) that receives the rotation operation, and
the second operation portion (132) includes a press portion (132a) that receives the press operation and is disposed inside the peripheral portion (131a).

4. The portable game device (100) according to claim 3, wherein
in an unpressed state of the press portion (132a), an end portion of the press portion (131a) on a side opposite to a body portion side is located closer to the body portion (100a) than an end portion of the peripheral portion (131a) on the side opposite to the body portion side.

5. The portable game device (100) according to claim 1, wherein
the first operation portion (131) is not pressed in conjunction with the press operation on the second operation portion (132).

6. The portable game device (100) according to claim 5, wherein
the second operation portion (132) is rotatable about the first axis in conjunction with rotation of the first operation portion (131).

7. The portable game device (100) according to claim 6, wherein
in a state in which the second operation portion (132) is pressed, the second operation portion does not rotate in conjunction with the rotation of the first operation portion (131).

8. The portable game device (100) according to claim 1, further comprising:
a first member (133) that rotates in response to rotation of the first operation portion (131) and is pressed in response to a press on the second operation portion (132);
a rotation detector (134) configured to detect rotation of the first member (133); and
a press detector (135) configured to detect press on the first member (133), wherein
the controller (101) controls the progress of the electronic game based on detection results of the rotation detector (134) and the press detector (135).

9. The portable game device (100) according to claim 8, wherein
the first operation portion (131) engages with the first member (133) in a rotation direction about the first axis and is slidable in a direction of the first axis,
an elastic member (136) is provided between the second operation portion (132) and the first member (133), and
the second operation portion (132) is biased in a second direction opposite to the first direction by a biasing force of the elastic member (136).

10. The portable game device (100) according to claim 9, wherein
the first operation portion (131) includes a regulating portion (13 1c) that regulates movement of the second operation portion (132) in the second direction,
the second operation portion (132) includes an abutment portion (132d) that abuts against the regulating portion (131c) by the biasing force of the elastic member (136) in an unpressed state, and
the first operation portion (131) and the second operation portion (132) integrally rotate by a friction between the abutment portion (132d) and the regulating portion (131c) in the unpressed state of the second operation portion (132).

11. The portable game device (100) according to claim 9, wherein
the first member (133) includes:
a shaft portion (133a) along the first axis, the shaft portion (133a) being a detected portion detected by the rotation detector (134) and the press detector (135); and
a rotation engagement portion (133b) that is wider than the shaft portion (133a) when viewed in the direction of the first axis, engages with the first operation portion (131) in the rotation direction about the first axis, and is slidable in the direction of the first axis.

12. The portable game device (100) according to claim 1, wherein
the first operation portion (131) enables scaling a display content in the electronic game.

13. The portable game device (100) according to claim 12, wherein
the first operation portion (131) enables scaling in a display of a virtual space in which a character appearing in the electronic game is present.

14. The portable game device (100) according to claim 1, wherein
the first operation portion (131) enables switching a selection target among a plurality of options in the electronic game, and
the second operation portion (132) enables a determination instruction in the electronic game.

15. A non-transitory computer-readable storage medium storing a control program for causing a portable game device (100) according to any one of claims 1-14 to perform a process, wherein
the portable game device executes an electronic game and includes a first operation portion (131) enabling a rotation operation about a first axis, a second operation portion (132) enabling a press operation in a first direction along the first axis, and a processor, and
the process comprises:
controlling a progress of the electronic game in response to an operation on at least one of the first operation portion (131) and the second operation portion (132).
